# EUROPEAN PATENT APPLICATION

(11) **EP 2 146 077 A1**
(43) Date of publication of application: **20.01.2010**
(21) Application number: 09165699.1
(22) Date of filing: 16.07.2009
(51) Int. Cl.: F02D 41/00, F02D 41/24

(54) **Engine control apparatus**

(30) Priority: 16.07.2008 JP 2008185101
(71) Applicant: Toyota Jidosha Kabushiki Kaisha, Toyota-shi, Aichi-ken 471-8571 (JP)
(72) Inventor: Nakamura, Yoshifumi, Toyota-shi, Aichi-ken 471-8571 (JP)
(74) Representative: Intes, Didier Gérard André

(57) **Abstract**

A control apparatus (900) for an engine (10) installed in a vehicle, provided with stopping means for controlling the engine so that the engine stops automatically in a case where conditions are satisfied that at least include a condition of the vehicle having stopped, and prohibiting means for prohibiting the control that causes the engine to stop automatically in a case where conditions are satisfied that at least include a condition of the engine output shaft rotating speed, during the engine operation, being lower than a predetermined rotating speed, namely in case the engine is unable to operate autonomously, since the learning process for maintaining an idle speed is not completed yet.

## Description

### BACKGROUND OF THE INVENTION

### 1. Field of the Invention

The invention relates to an engine control apparatus, and more particularly, to a technology for prohibiting idle stop.

### 2. Description of the Related Art

Vehicles having an idle stop function (also referred to as an economy running function) that automatically stops the engine when certain conditions are satisfied have been developed, such as the driver pressing on the brake pedal when the vehicle is stopped. In such vehicles, the time during which the engine is idling is shortened enabling a reduction in fuel consumption.

However, even in vehicles having an idle stop function, for example, the engine may be started in preparation for starting out when the driver releases his foot from the brake pedal, and the engine may idle unless the driver presses on the accelerator pedal. Thus, similar to an ordinary vehicle, in order to maintain engine rotating speed (NE) during idling at, for example, a target idling speed or greater, it is necessary to control the throttle opening by idle speed control (ISC). The ISC increases or decreases the throttle opening corresponding to the difference between the NE and the target idling speed. In the vehicle, the throttle opening is learned that enables the NE to be maintained at a rotating speed equal to or greater than the target idling speed.

However, in vehicles having an idle stop function, since the number of opportunities for the engine to idle is reduced, there are fewer opportunities for the vehicle to learn the throttle opening during idling. Therefore, a technology is proposed that prohibits idle stop in cases in which it is necessary for the engine to learn the throttle opening during idling.

Japanese Patent Application Publication No. 2007-71178 (JP-A-2007-71178) discloses a vehicle learning control apparatus applied to a vehicle having an idle stop function that automatically stops an internal combustion engine when the vehicle is stopped temporarily, provided with a learning control unit that carries out learning by operating the internal combustion engine in a prescribed pattern while the internal combustion engine is idling, and an information transmission unit that transmits information to a passenger in the vehicle. When it has been judged that learning should be executed, the learning control unit interrupts automatic stopping of the internal combustion engine by the idle stop function the next time the vehicle is stopped temporarily, and transmits information to the information transmission unit to the effect that learning is to be executed without stopping the internal combustion engine the next time the vehicle is stopped temporarily. For example, in the case the distance traveled by the vehicle since the previous time learning was executed has exceeded a prescribed value (such as 10,000 km), or in the case NE fluctuations have exceeded a prescribed value due to, for example, fluctuations between cylinders in the amounts of fuel injected, learning is judged to be required to be executed.

According to the learning control apparatus described in JP-A-2007-71178, automatic stopping of the internal combustion engine when the vehicle is stopped temporarily is interrupted when learning is required. Consequently, even in a vehicle having an idle stop function, learning can be executed while the vehicle is idling.

However, in the learning control apparatus described in JP-A-2007-71178, idle stop is prohibited even in case NE can be maintained at a rotating speed equal to or greater than a target idling speed, in the case distance traveled by the vehicle since the previous time learning was executed has exceeded a prescribed value, or in the case NE fluctuations have exceeded a prescribed value. Consequently, the opportunities for executing idle stop decrease and fuel consumption can become poor.

### SUMMARY OF THE INVENTION

The invention provides an engine control apparatus capable of reducing exacerbation of fuel consumption by prohibiting control such that the engine stops automatically.

In a first aspect thereof, the invention relates to an engine control apparatus installed in a vehicle. The control apparatus is provided with stopping means for controlling the engine so that the engine stops automatically in a case where conditions are satisfied that at least include a condition of the vehicle having stopped, and prohibiting means for prohibiting control that causes the engine to stop automatically in a case where conditions are satisfied that at least include a condition of engine output shaft rotating speed, during engine operation, being lower than a predetermined rotating speed.

According to this control apparatus, opportunities for learning throttle opening by the ISC can be secured by prohibiting control causing the engine to stop automatically only in the case the engine is unable to operate autonomously due to NE having decreased to or beyond a prescribed value. Consequently, the frequency of prohibition of control that causes the engine to stop automatically can be reduced by not prohibiting control causing the engine to stop automatically in the case the engine is able to operate autonomously. As a result, an engine control apparatus can be provided that is capable of reducing exacerbation of fuel consumption by prohibiting control that causes the engine to stop automatically.

The prohibiting means may also include means for prohibiting control that causes the engine to stop automatically in a case where a state, in which engine output shaft rotating speed during engine operation is lower than a predetermined rotating speed by a predetermined value or more, continues for a predetermined amount of time or longer.

According to this control apparatus, opportunities for learning throttle opening by the ISC can be secured by prohibiting control that causes the engine to stop automatically only in the case the engine is unable to operate autonomously due to the NE having continuously decreased. Consequently, the frequency of prohibition of control that causes the engine to stop automatically can be reduced by not prohibiting control that causes the engine to stop automatically in the case NE has only temporarily decreased.

The prohibiting means may also include means for prohibiting control that causes the engine to stop automatically in a case where a product of duration of a state in which engine output shaft rotating speed during engine operation is lower than a predetermined rotating speed by a predetermined value or more, and a difference between the engine output shaft rotating speed and a predetermined rotating speed, is equal to or greater than a predetermined value.

According to this control apparatus, opportunities for learning throttle opening by the ISC can be secured by prohibiting control that causes the engine to stop automatically only in the case the engine is unable to operate autonomously due the NE having continuously decreased or the NE having suddenly decreased in a short period of time. Consequently, the frequency of prohibition of control that causes the engine to stop automatically can be reduced by not prohibiting control that causes the engine to stop automatically in the case engine is able to operate autonomously.

The prohibiting means may also use the EN, at which the engine is able to operate self-sustainingly, for the predetermined rotating speed.

The control apparatus may be further provided with a canceling means for canceling the prohibition by the prohibiting means in a case where a state, in which the engine output shaft rotating speed is equal to or greater than a predetermined rotating speed, continues for a prescribed amount of time or longer when prohibition of control by the prohibiting means that causes the engine to stop automatically has been executed.

In a second aspect thereof, the invention relates to a control method of an engine installed in a vehicle. This control method causes the engine to automatically stop in a case where conditions are satisfied that at least include a condition of the vehicle having been stopped, and prohibits the engine from stopping automatically in a case where conditions are satisfied that at least include a condition of the engine output shaft rotating speed, during engine operation, being lower than a predetermined rotating speed.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic block drawing showing an engine;
FIG. 2 is a schematic block drawing showing a vehicle power train;
FIG. 3 is a control block drawing showing an electronic control unit (ECU);
FIG. 4 is a function block drawing of an ECU in a first embodiment;
FIG. 5 is a flow chart showing the control structure of a program executed by an ECU in a first embodiment;
FIG. 6 is a drawing showing NE in a first embodiment;
FIG. 7 is a function block drawing of an ECU in a second embodiment;
FIG. 8 is a flow chart showing the control structure of a program executed by an ECU in a second embodiment; and
FIG. 9A shows NE in a second embodiment and the product of duration and difference in rotating speeds.

### DETAILED DESCRIPTION OF EMBODIMENTS

The following provides an explanation of embodiments of the invention with reference to the drawings. In the following explanation, like reference numerals are used to indicate like components, and their names and functions are also the same. Thus, detailed explanations thereof are not repeated.

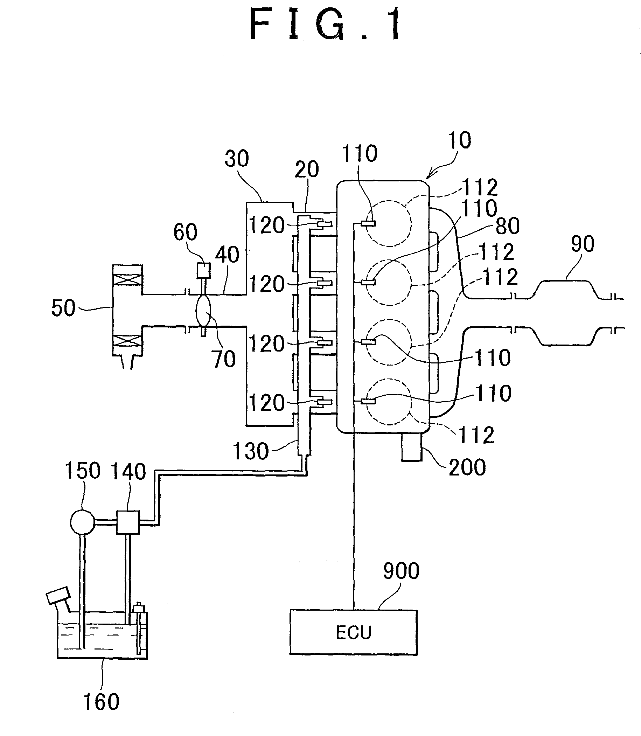

The following provides an explanation of a vehicle engine system having a control apparatus as claimed in a first embodiment of the invention with reference to FIG. 1. Furthermore, although FIG. 1 shows an inline four-cylinder gasoline engine, the invention is not limited to such an engine and can be applied to various types of engines such as a V engine with six cylinders (V-6 engine) or V engine with eight cylinders (V-8 engine).

An engine 10 is an internal combustion engine. As shown in FIG. 1, the engine 10 is provided with four cylinders 112, and each of the cylinders 112 is connected to a common surge tank 30 through an intake manifold 20. The surge tank 30 is connected to an air cleaner 50 through an intake duct 40.

A throttle valve 70 driven by an electric motor 60 is arranged within the intake duct 40. The throttle valve 70 is controlled so that a throttle opening TA changes in response to an accelerator depression amount. In the case the engine 10 is idling, throttle opening is controlled by the ISC so that NE becomes a target idling speed. Throttle opening during idling TAISC is corrected in response to engine operating status.

In the case, for example, NE during idling is below a threshold value NE1, the throttle opening during idling TAISC is corrected so as to increase by a predetermined value. In the case the NE during idling exceeds a threshold value NE2, the throttle opening during idling TAISC is corrected so as to decrease by a predetermined value.

In addition, in the case predetermined learning conditions have been satisfied, a learning value (ISCG) of the throttle opening during idling TAISC, namely an air flow rate learning value, is calculated. The ISCG is calculated by, for example, increasing the ISCG by a predetermined value in the case the throttle opening during idling TAISC has exceeded a threshold value TAISC1, or decreasing the ISCG by a predetermined value in the case the throttle opening during idling TAISC has fallen below a threshold value TAISC2.

Each cylinder 112 is coupled to a common exhaust manifold 80, and this exhaust manifold 80 is coupled to a three-way catalytic converter 90. A spark plug 110 and an injector 120, which injects fuel towards the intake port and/or intake path, are respectively provided for each cylinder 112. The spark plugs 110 and the injectors 120 are controlled based on the output of an electronic control unit (ECU) 900.

Each of the injectors 120 is connected to a delivery pipe 130, and the delivery pipe 130 is connected to an electric motor-driven fuel pump 150 through a fuel pressure regulator 140. The fuel pressure regulator 140 is composed such that a portion of fuel discharged from the fuel pump 150 is returned to a fuel tank 160 when the fuel pressure of fuel discharged from the fuel pump 150 exceeds a predetermined set fuel pressure. Thus, the fuel pressure regulator 140 prevents the pressure of fuel supplied to the injectors 120 from exceeding the set fuel pressure.

The engine 10 starts as a result of being cranked by a starter 200. For example, the engine 10 is controlled so as to start when an ignition switch is switched from off to on. The engine 10 is stopped when the ignition switch is switched from on to off.

In addition, the engine 10 is controlled so as to stop automatically when idle stop conditions have been satisfied. Namely, idle stop is executed. The idle stop conditions include the condition of the vehicle being stopped (vehicle speed is zero), the condition of the accelerator depression amount (ACC) being zero, or the brake pedal being operated (brake pedal is pressed).

Moreover, the engine 10 is controlled so as to start automatically in the case starting conditions are satisfied that include the condition of the foot being released from the brake pedal.

Furthermore, a more detailed explanation is not repeated here since conventional conditions may be used for idle stop conditions and starting conditions.

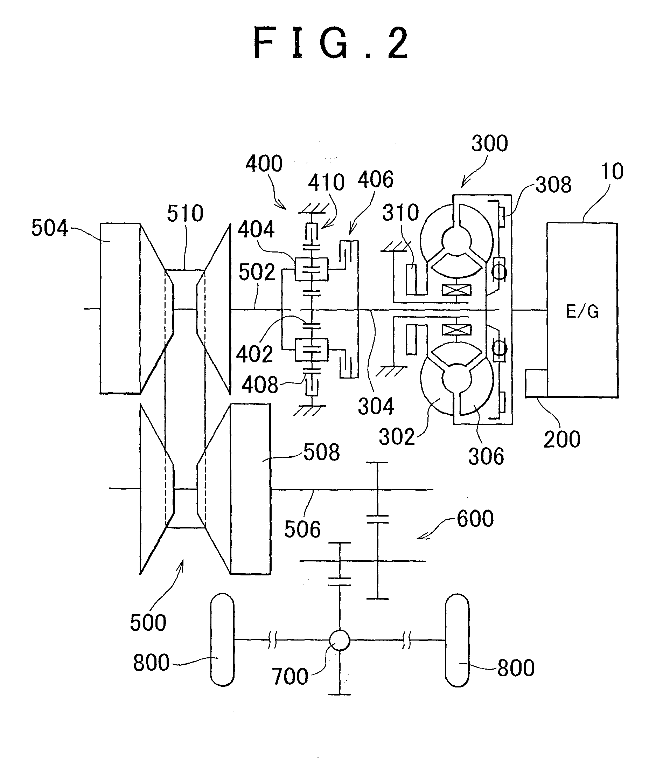

With reference to FIG. 2, output of the engine 10 is input to a belt-type continuously variable transmission 500 through a torque converter 300 and a forward-reverse switching apparatus 400. Output of the continuously variable transmission 500 is transmitted to a reduction gear 600 and a differential gear apparatus 700 and distributed to left and right driving wheels 800.

Furthermore, a chain-type or toroidal-type continuously variable transmission may be used instead of the belt-type continuously variable transmission 500, or an automatic transmission having a planetary gear unit may be used for the transmission mechanism.

The torque converter 300 is composed of a pump vane wheel 302 coupled to a crankshaft of the engine 10, and a turbine vane wheel 306 coupled to the forward-reverse switching apparatus 400 through a turbine shaft 304. A lockup clutch 308 is provided between the pump vane wheel 302 and the turbine vane wheel 306. The lockup clutch 308 is engaged or released by switching the supply of fluid pressure to an engaging side fluid chamber and releasing side fluid chamber.

The pump vane wheel 302 and the turbine vane wheel 306 are integrally rotated as a result of the lockup clutch 308 being completely engaged. The pump vane wheel 302 is provided with a mechanical oil pump 310 that generates hydraulic pressure for controlling shifting of gears by the continuously variable transmission 500, generating belt clamping pressure or supplying lubricating oil to each component.

The forward-reverse switching apparatus 400 is composed of a double pinion-type planetary gear apparatus. The turbine shaft 304 of the torque converter 300 is coupled to a sun gear 402. An input shaft 502 of the continuously variable transmission 500 is coupled to a carrier 404. The carrier 404 and the sun gear 402 are coupled through a forward clutch 406. A ring gear 408 is fixed to a housing through a reverse brake 410. The forward clutch 406 and the reverse clutch 410 are frictionally engaged by a hydraulic cylinder. The input rotating speed of the forward clutch 406 is equal to the rotating speed of the turbine shaft 304, namely the turbine rotating speed NT.

The forward-reverse switching apparatus 400 is engaged for forward operation by engaging the forward clutch 406 and releasing the reverse brake 410. When in this state, driving force in the forward direction is transmitted to the continuously variable transmission 500. The forward-reverse switching apparatus 400 is engaged for reverse operation by engaging the reverse brake 410 and releasing the forward clutch 406. When in this state, the input shaft 502 is rotated in the opposite direction of the turbine shaft 304. As a result, driving force in the reverse direction is transmitted to the continuously variable transmission 500. When both the forward clutch 406 and the reverse brake 410 are released, the forward-reverse switching apparatus 400 enters a neutral state in which transmission of driving force is interrupted.

The continuously variable transmission 500 is composed of a primary pulley 504 provided on the input haft 502, a secondary pulley 508 provided on an output shaft 506, and a transmission belt 510 wound around these pulleys. Motive power is transmitted by utilizing the frictional force between each pulley and the transmission belt 510.

Each pulley is composed of a hydraulic cylinder so as to be able to vary groove width. The groove width of each pulley is varied by controlling the hydraulic pressure of the hydraulic cylinder of the primary pulley 504. As a result, the wound diameter of the transmission belt 510 is changed resulting in a continuous change in the gear ratio GR (= primary pulley rotating speed NIN/secondary pulley rotating speed NOUT).

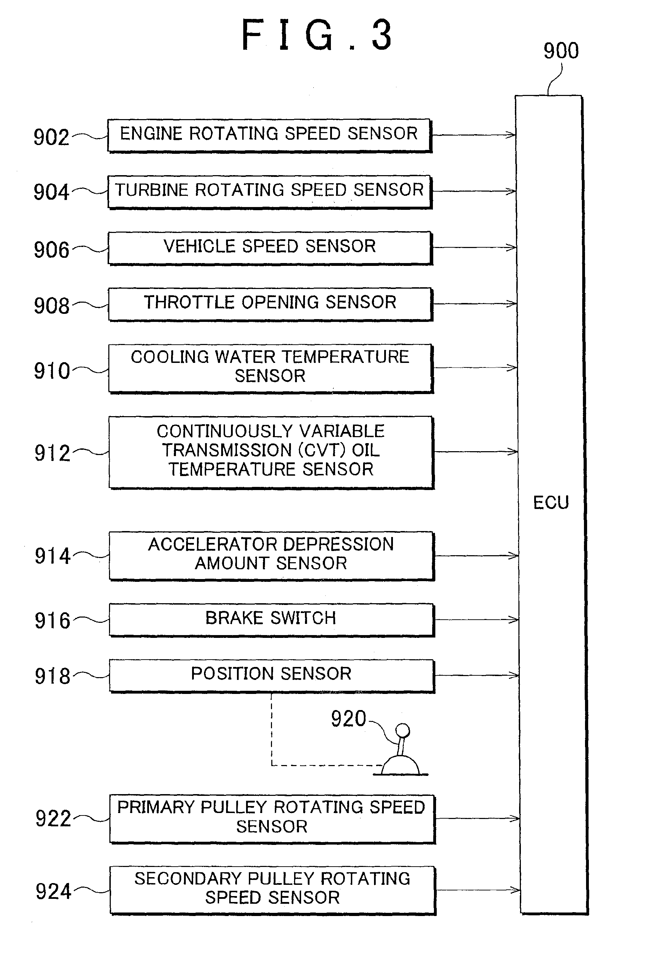

As shown in FIG. 3, inputs from an engine rotating speed sensor 902, turbine rotating speed sensor 904, vehicle speed sensor 906, throttle opening sensor 908, cooling water temperature sensor 910, oil temperature sensor 912, accelerator depression amount sensor 914, brake switch 916, position sensor 918, primary pulley rotating speed sensor 922, secondary pulley rotating speed sensor 924 and the like are input to the ECU 900.

The engine rotating speed sensor 902 detects the NE of the engine 10. The turbine rotating speed sensor 904 detects the rotating speed NT of the turbine 304 (turbine rotating speed). The vehicle speed sensor 906 detects the vehicle speed V. The throttle opening sensor 908 detects the opening TA of the throttle valve 70. The cooling water temperature sensor 910 detects the cooling water temperature TW of the engine 10. The oil temperature sensor 912 detects the oil temperature TC of the continuously variable transmission 500 and the like. The accelerator depression amount sensor 914 detects ACC of the accelerator pedal. The brake switch 916 detects the presence or absence of operation of the brake pedal. The position sensor 918 detects the position (PSH) of a shift lever 920 by determining whether or not a contact provided at a location corresponding to a shift position is on or off. The primary pulley rotating speed sensor 922 detects the input shaft rotating speed NIN of the continuous variable transmission 500 (rotating speed of the primary pulley 504). The secondary pulley rotating speed sensor 924 detects the output shaft rotating speed NOUT of the continuously variable transmission 500 (rotating speed of the secondary pulley 508). Signals indicating the detection result of each sensor are transmitted to the ECU 900. The turbine rotating speed NT coincides with the primary pulley rotating speed NIN when traveling forward with the forward clutch 406 engaged. The vehicle speed V is a value that corresponds to the secondary pulley rotating speed NOUT.

The ECU 900 contains a central processing unit (CPU), memory, input/output interface and the like. The CPU processes signals according to a program stored in the memory. The CPU executes output control of the engine 10, control of gear shifting of the continuously variable transmission 500, belt clamping pressure control, control of engagement and release of the forward clutch 406, control of engagement and release of the reverse brake 410 and the like according to the signals.

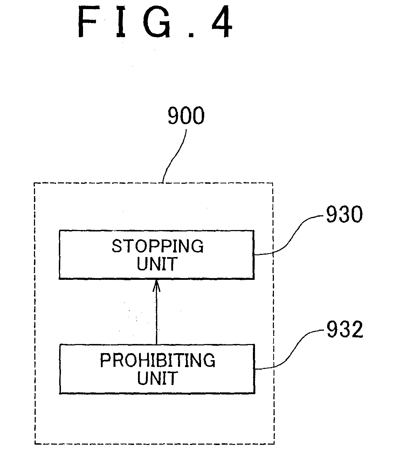

The following provides an explanation of functions of the ECU 900 with reference to FIG. 4. The functions explained below may be realized with software or realized with hardware. The ECU 900 may also be divided among a plurality of ECUs.

The ECU 900 is provided with a stopping unit 930 and a prohibiting unit 932. The stopping unit 930 controls the engine 10 so as to stop automatically in the case predetermined idle stop conditions have been satisfied.

The prohibiting unit 932 prohibits idle stop, namely prohibits control that causes the engine 10 to stop automatically in the case conditions are satisfied that at least include the condition of the NE of the engine 10 being lower than a predetermined target rotating speed.

More specifically, control that causes the engine 10 to stop automatically is prohibited in the case a state in which the NE of the engine 10 is lower than a target rotating speed by a predetermined value ΔNE or more continues for a time ΔT or more.

Furthermore, the target rotating speed is determined based on the results of experimentation, simulation and the like within the range of the rotating speed at which the engine 10 is able to operate autonomously, namely the rotating speed at which the engine 10 does not stall.

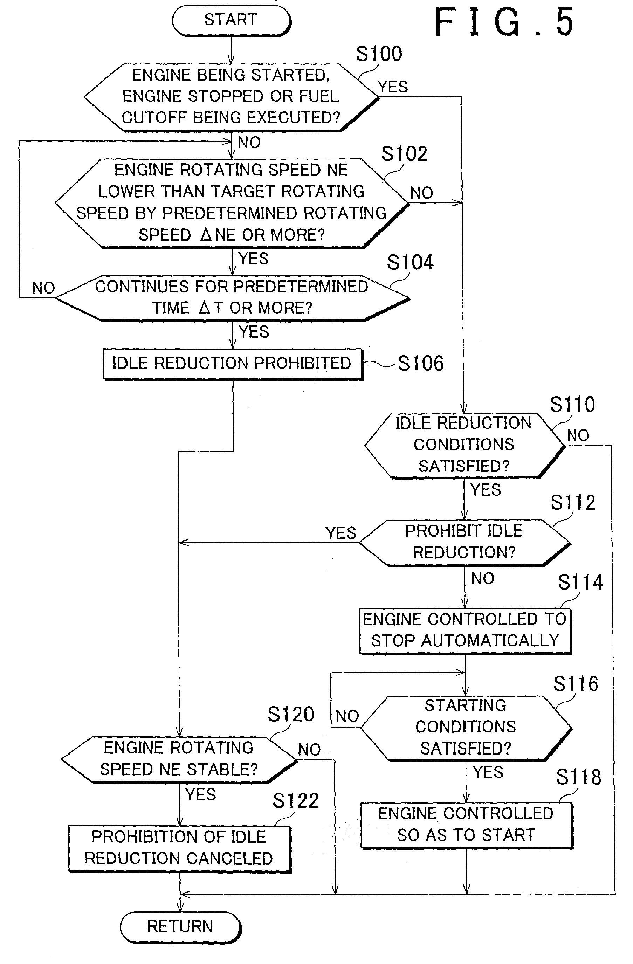

The following provides an explanation of the control structure of a program executed by the ECU 900 with reference to FIG. 5. Furthermore, the program executed by the ECU 900 may be distributed commercially by recording on a recording medium such as a compact disc (CD) or digital versatile disc (DVD) and the like.

In a step (abbreviated simply as "S") 100, the ECU 900 determines whether or not conditions of the engine 10 not being started, the engine 10 not being stopped, and fuel cutoff not being executed are satisfied. Whether or not the engine 10 is currently operating is then determined on the basis thereof.

If the conditions of the engine 10 not being started, the engine 10 not being stopped, and fuel cutoff being executed are not satisfied (NO in S100), namely if the engine 10 is currently operating, processing proceeds to S102. Otherwise (YES in S100), processing proceeds to S 110.

In S102, the ECU 900 determines whether or not the NE is lower than a target rotating speed by a predetermined value ΔNE or more. If the NE is lower than the target rotating speed by the predetermined value ΔNE or more (YES in S102), processing proceeds to S104. If it is not (NO in S102), processing proceeds to S110.

In S104, the ECU 900 determines whether or not the state in which the NE is lower than the target rotating speed by the predetermined value ΔNE or more has continued for a predetermined time ΔT or more. If the state in which the NE is lower than the target rotating speed by the predetermined value ΔNE or more continues for the predetermined time ΔT or more (YES in S104), processing proceeds to S 106. If it does not (NO in S 104), processing returns to S 102.

In S106, the ECU 900 prohibits idle stop, namely prohibits control that causes the engine 10 to stop automatically.

In S110, the ECU 900 determines whether or not idle stop conditions have been satisfied. If the idle stop conditions have been satisfied (YES in S110), processing proceeds to S112. If they have been not (NO in S110), processing returns to S100.

In S 112, the ECU 900 determines whether or not the engine 10 is to be controlled so as to stop automatically, or in other words, whether or not idle stop is prohibited. If idle stop is prohibited (YES in S112), processing proceeds to S120. If it is not (NO in S 112), processing proceeds to S 114.

In S114, the ECU 900 controls the engine 10 so as to stop automatically. In S 116, the ECU 900 determines whether or not starting conditions have been satisfied. If starting conditions are satisfied (YES in S 116), processing proceeds to S118. If they are not satisfied (NO in S116), processing returns to S 116. In S 118, the ECU 900 controls the engine 10 so that the engine 10 starts.

In S120, the ECU 900 determines whether or not NE during idling has stabilized by learning the throttle opening TAISC during idling. For example, if the state in which the NE during idling is equal to greater than a target idling speed continues for a predetermined time or longer, the NE during idling is judged to have stabilized. Furthermore, the method used to determine whether or not the NE has stabilized is not limited thereto.

When the NE during idling becomes stable as a result of learning the throttle opening TAISC during idling (YES in S120), processing proceeds to S122. If it is not (NO in S120), processing returns to S100. In S122, the ECU 900 cancels prohibition of idle stop.

The following provides an explanation of the operation of the control apparatus as claimed in this embodiment based on the structure and flow chart as previously described.

In the case conditions of the engine 10 not being started, the engine 10 not being stopped, and fuel cutoff not being executed are not satisfied (NO in S100), or in the case the NE is not lower than a target rotating speed by a predetermined value ΔNE or more (NO in S102), a determination is made as to whether or not idle stop conditions are satisfied (S 110).

The engine 10 is controlled so as to stop automatically (S114) if the idle stop conditions are satisfied (YES in S110) and idle stop is not prohibited (NO in S 112). The engine 10 is controlled so as to start (S 118) if the starting conditions are satisfied (YES in S 116).

On the other hand, if the conditions of the engine 10 not being started, the engine 10 not being stopped, and fuel cutoff not being executed are satisfied (YES in S100), or in other words, if the engine 10 is being started and the NE is lower than a target rotating speed by a predetermined value ΔNE or more (YES in S102), a determination is made as to whether or not the state in which the NE is lower than a target rotating speed by a predetermined value ΔNE or more has continued for the time ΔT or longer (S104).

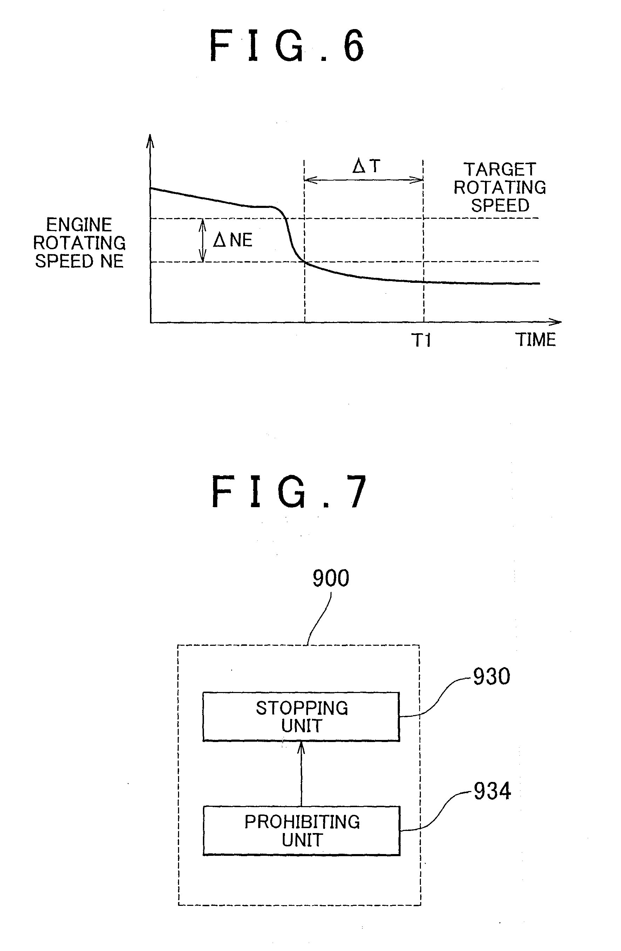

For example, if intake air volume decreases for reasons such as deposits adhering to the throttle valve 70, as shown in FIG. 6, the state in which the NE is lower than a target rotating speed by a predetermined value ΔNE or more continues for the time ΔT or longer (YES in S104) at a time T1. In this case, control that causes the engine 10 to stop automatically, or in other words, idle stop, is prohibited (S106). Thus, the engine 10 is not stopped even if idle stop conditions are satisfied (YES in S 110).

As a result, control that causes the engine 10 to stop automatically is prohibited only in the case the engine 10 can be said to be unable to operate autonomously due to the NE having continuously decreased, thereby making it possible to secure an opportunity for the ISC to learn the throttle opening TAISC during idling. Consequently, the frequency at which control that causes the engine 10 to stop automatically is prohibited can be reduced by not prohibiting control that causes the engine 10 to stop automatically in the case the NE has only temporarily decreased. As a result, exacerbation of fuel consumption caused by prohibiting control causing the engine 10 to stop automatically can be reduced.

When the NE during idling subsequently becomes stable as a result of learning the throttle opening TAISC during idling (YES in S120), prohibition of idle stop is canceled (S122).

As has been described above, according to the control apparatus as claimed in this embodiment, in the case conditions that at least include the conditions that an engine is currently in operation and the NE is lower than a target rotating speed are satisfied, control that causes the engine to stop automatically is prohibited. As a result, an opportunity for the ISC to learn the throttle opening TAISC during idling can be secured by prohibiting control that causes the engine to stop automatically only in the case the engine is unable to operate autonomously due to a decrease in the NE. Consequently, the frequency at which control that causes the engine to stop automatically is prohibited can be reduced by not prohibiting control that causes the engine to stop automatically in the case the engine is able to operate independently. As a result, exacerbation of fuel consumption caused by prohibiting control causing the engine to stop automatically can be reduced.

The following provides an explanation of a second embodiment of the invention. This embodiment differs from the above-mentioned first embodiment in that, in the case the product of the duration of a state in which the NE during engine operation is lower than a target rotating speed by a predetermined value ΔNE or more, and the difference between the NE and the target rotating speed, is equal to or greater than a predetermined value, the engine 10 is controlled so as to stop automatically. Other structures of the second embodiment are the same as those of the first embodiment. As such, a detailed explanation thereof is not repeated here.

The following provides an explanation of the functions of the ECU 900 with reference to FIG. 7. The functions explained below may be realized with software or realized with hardware. The ECU 900 may also be divided among a plurality of ECUs.

A prohibiting unit 934 of the ECU 900 in this embodiment prohibits control that causes the engine 10 to stop automatically in the case the product of the duration of a state in which the NE during engine operation is lower than a target rotating speed by a predetermined value ΔNE or more, and the difference between the NE and the target rotating speed (absolute value of that difference), is equal to or greater than a predetermined value.

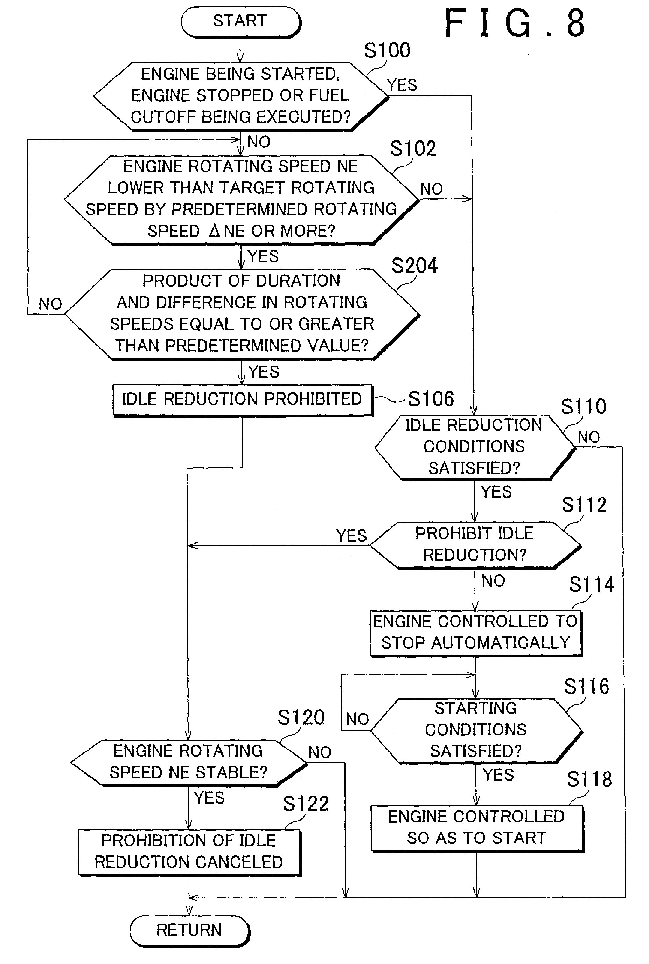

The following provides an explanation of the control structure of a program executed by the ECU 900 with reference to FIG. 8. Furthermore, a detailed explanation of processing that is the same as processing of the first embodiment as previously described is not repeated here.

In S204, the ECU 900 determines whether or not the product of the duration of a state in which the NE during engine operation is lower than a target rotating speed by a predetermined value ΔNE or more, and the difference between the NE and the target rotating speed, is equal to or greater than a predetermined value.

If the product of the duration of a state in which NE during engine operation is lower than a target rotating speed by a predetermined value ΔNE or more, and the difference between the NE and the target rotating speed, is equal to or greater than a predetermined value (YES in S204), processing proceeds to S 106. If it is not (NO in S204), processing returns to S102.

The following provides an explanation of the operation of the control apparatus as claimed in this embodiment based on the structure and flow chart as previously described.

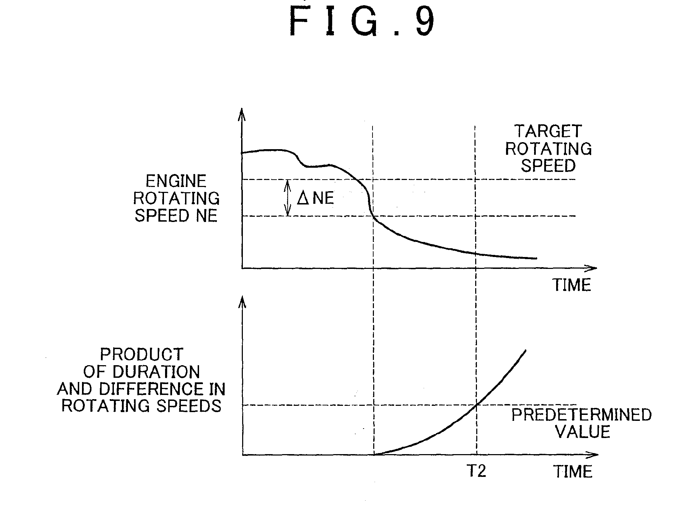

For example, if intake air volume decreases for reasons such as deposits adhering to the throttle valve 70, or if the load suddenly increases due to a malfunction of the alternator coupled to the output shaft (crankshaft) of the engine 10, as shown in FIG. 9, the product of the duration of a state in which the NE during engine operation is lower than a target rotating speed by a predetermined value ΔNE or more, and the difference between the NE and the target rotating speed, becomes equal to or greater than a predetermined value at a time T2 (YES in S204). In this case, control that causes the engine 10 to stop automatically, or in other words, idle stop, is prohibited (S106). Thus, the engine 10 is not stopped even if idle stop conditions are satisfied (YES in S110).

As a result, control that causes the engine 10 to stop automatically is prohibited only in the case the engine 10 can be said to be unable to operate autonomously due to the NE having continuously decreased or the NE having decreased suddenly in a short period of time, thereby making it possible to secure an opportunity for the ISC to learn the throttle opening TAISC during idling. Consequently, the frequency at which control that causes the engine 10 to stop automatically is prohibited can be reduced by not prohibiting control that causes the engine 10 to stop automatically in the case the engine 10 is able to operate autonomously. As a result, exacerbation of fuel consumption caused by prohibiting control causing the engine 10 to stop automatically can be reduced.

While the invention has been described with reference to example embodiments thereof, it is to be understood that the invention is not limited to the described embodiments or constructions. To the contrary, the invention is intended to cover various modifications and equivalent arrangements. In addition, while the various elements of the disclosed invention are shown in various example combinations and configurations, other combinations and configurations, including more, less or only a single element, are also within the scope of the appended claims.

## Claims

1. A control apparatus (900) of an engine (10) installed in a vehicle, comprising:
stopping means (930) for controlling the engine so that the engine stops automatically in a case where conditions are satisfied that at least include a condition of the vehicle having stopped, and
prohibiting means (932) for prohibiting the control that causes the engine to stop automatically in a case where conditions are satisfied that at least include a condition of the engine output shaft rotating speed, during the engine operation, being lower than a predetermined rotating speed.

2. The control apparatus according to claim 1, wherein the prohibiting means includes means for prohibiting control that causes the engine to stop automatically in a case where a state, in which the engine output shaft rotating speed during the engine operation is lower than the predetermined rotating speed by a predetermined value or more, continues for a predetermined amount of time or longer.

3. The control apparatus according to claim 1, wherein the prohibiting means includes means for prohibiting control that causes the engine to stop automatically in a case where a product of duration of a state in which the engine output shaft rotating speed during the engine operation is lower than the predetermined rotating speed by a predetermined value or more, and a difference between the engine output shaft rotating speed and the predetermined rotating speed, is equal to or greater than a predetermined value.

4. The control apparatus according to any one of claims 1 to 3, wherein the prohibiting means uses an engine rotating speed, at which the engine is able to operate self-sustainingly, for the predetermined rotating speed.

5. The control apparatus according to any one of claims 1 to 4, further comprising:
canceling means for canceling the prohibition by the prohibiting means in a case where a state, in which the engine output shaft rotating speed is equal to or greater than a predetermined rotating speed, continues for a prescribed amount of time or longer when prohibition of control by the prohibiting means that causes the engine to stop automatically has been executed.

6. A control method of an engine installed in a vehicle, comprising:
causing the engine to automatically stop (S114) in the case conditions are satisfied that at least include a condition of the vehicle having been stopped (S110), and
prohibiting the engine from stopping automatically (S106) in a case where conditions are satisfied that at least include a condition of the engine output shaft rotating speed, during the engine operation, being lower than a predetermined rotating speed (S102).
